# EUROPÄISCHE PATENTSCHRIFT

(11) **EP 3 380 719 B1**
(45) Veröffentlichungstag und Bekanntmachung des Hinweises auf die Patenterteilung: **04.11.2020**
(21) Anmeldenummer: 16795377.7
(22) Anmeldetag: 16.11.2016
(51) Int. Cl.: F03D 1/06

(54) **ROTORBLATT EINER WINDENERGIEANLAGE**
ROTOR BLADE FOR A WIND TURBINE
PALE DE ROTOR D'UNE ÉOLIENNE

(30) Priorität: 26.11.2015 DE 102015015217
(43) Veröffentlichungstag der Anmeldung: 03.10.2018
(73) Patentinhaber: Senvion GmbH, 22297 Hamburg (DE)
(72) Erfinder: ERBSLÖH, Sascha, 22419 Hamburg (DE); KLEMME, Thomas, 24106 Kiel (DE)
(74) Vertreter: Hahner, Ralph
(86) Internationale Anmeldenummer: PCT/EP2016/077838
(87) Internationale Veröffentlichungsnummer: WO 2017/089194

(56) Entgegenhaltungen:
- WO-A2-2008/119352
- CN-A- 103 335 059
- CN-A- 103 541 870
- DE-A1-102012 201 470
- US-A1- 2011 031 759

## Beschreibung

Die Erfindung betrifft ein Rotorblatt einer Windenergieanlage, wobei das Rotorblatt eine Saugseite, eine Druckseite, eine Rotorblattnase und eine Rotorblatthinterkante aufweist, die sich zwischen einer Rotorblattwurzel und einer Rotorblattspitze erstrecken und ein Rotorblattprofil festlegen. Außerdem betrifft die Erfindung eine Windenergieanlage mit wenigstens einem Rotorblatt, vorzugsweise drei Rotorblätter, aufweisenden Rotor.

Es ist bekannt, dass Rotorblätter einer Windenergieanlage ein Rotorblattprofil aufweisen, das eine Saugseite und eine Druckseite umfasst, die sich auf der Außenseite einer Saugseitenschale und einer Druckseitenschale des Rotorblatts erstrecken. Im Bereich einer Rotorblattnase sowie einer Rotorblatthinterkante sind die Saugseitenschale und die Druckseitenschale zusammengefügt, beispielsweise verklebt. Es entsteht ein Rotorblatt, welches sich ausgehend von einer Rotorblattwurzel, an der es mit einer Rotornabe einer Windenergieanlage verbunden ist, bis zur Rotorblattspitze erstreckt. Die Formen der Saugseite, der Druckseite sowie der Rotorblattnase und der Rotorblatthinterkante definieren das Rotorblattprofil.

Der Ertrag einer Windenergieanlage ist wesentlich durch die verbauten Rotorblattprofile ihrer Rotorblätter bestimmt. Aus diesem Grund werden Rotorblätter im Hinblick auf eine optimale Leistungsausbeute hinsichtlich ihres aerodynamischen Profils optimiert. Üblicherweise werden Rotorblätter für Windenergieanlagen in zwei Schalen gebaut, nämlich einer Schale auf der Saugseite des Rotorblatts und einer Schale auf der Druckseite des Rotorblatts, die miteinander verklebt werden. Zwischen den Schalen befinden sich im Allgemeinen bzw. in der Regel zwei Stege oder Holme, die auf dem Rotorblattgurt für die Saugseite und den Rotorblattgurt für die Druckseite verklebt werden.

Es hat sich ferner gezeigt, dass mit zunehmender Länge von Rotorblättern bei pitchgesteuerten Windenergieanlagen Flatterbewegungen der Rotorblätter auftreten können. Bei den Flatterbewegungen der Rotorblätter koppelt z. B. die erste Eigenmode der Torsionsbewegung des Rotorblatts mit einer Biegemode des Rotorblatts, wodurch unerwünschte Flatterschwingungen des Rotorblatts entstehen, wodurch es möglich sein kann, dass Rotorblätter Schaden nehmen können. Beispiele aus dem Stand der Technik sind CN103541870 und DE102012201470.

Es ist eine Aufgabe der Erfindung, ein Rotorblatt sowie eine Windenergieanlage anzugeben, bei dem Flatterbewegungen des Rotorblatts vermieden werden sollen und ein sicherer Betrieb einer Windenergieanlage gewährleistet sein soll.

Diese Aufgabe wird gelöst durch ein Rotorblatt einer Windenergieanlage, wobei das Rotorblatt eine Saugseite, eine Druckseite, eine Rotorblattnase und eine Rotorblatthinterkante aufweist, die sich zwischen einer Rotorblattwurzel und einer Rotorblattspitze erstrecken und ein Rotorblattprofil festlegen, das dadurch weitergebildet ist, dass in einem der Rotorblattspitze zugewandten Rotorblattendbereich wenigstens eine mit Füllgut befüllbare oder befüllte Kammer, zum Beispiel in einer Ausführung als Trimmkammer, vorgesehen ist.

Die Erfindung beruht auf dem Gedanken, dass bei der Herstellung von Rotorblättern die durch die Fertigung bedingten Gewichtsunterschiede zwischen unterschiedlichen Rotorblättern auf einfache Weise ausgeglichen werden, da die Trimmkammern mit einem Füllgut, wie zum Beispiel Metallkugeln, befüllt werden. Dadurch, dass im Rotorblattendbereich die Trimmkammern vorgesehen sind, werden Zusatzgewichte in diesem Endbereich in das Rotorblatt eingebracht, wodurch die Flatterdrehzahl von Rotorblättern erhöht wird.

Insbesondere werden durch die Positionierung der Trimmkammern zwischen der Rotorblattnase und einem vorderen Steg der Rotorblätter Zusatzgewichte vor den (normalen) Schwerpunkten der Profile im Rotorblattendbereich (ohne Zusatzgewichte) angebracht oder eingebracht, wodurch, insbesondere im Falle der Befüllung, zum Beispiel mit Metallkugeln, die Schwerpunkte der Profile im Rotorblattendbereich in Richtung Rotorblattnase bzw. Vorderkante entsprechend den vorbestimmten Anforderungen an das jeweilige Rotorblatt verschoben werden. Durch den verschobenen Schwerpunkt der Profile im Rotorblattendbereich wird auch eine signifikant höhere Flatterdrehzahl des Rotorblatts bzw. der Rotorblätter erreicht, wodurch eine höhere Sicherheit der betriebenen Windenergieanlage gegen Auftreten von Flatterbewegungen der Rotorblätter im Betrieb möglich wird.

Dazu ist gemäß einer vorteilhaften Weiterbildung des Rotorblatts vorgesehen, dass in einem Längenbereich zwischen 80 % und 100 % der Länge des Rotorblatts, insbesondere der Rotorblattlängsachse des Rotorblatts, gemessen von der Rotorblattwurzel zur Rotorblattspitze, die wenigstens eine Trimmkammer im Rotorblatt vorgesehen ist.

Bei dem Rotorblatt ist an der Rotorblattwurzel vorzugsweise ein Rotorblattanschluss zur Bindung mit einem Rotor vorgesehen.

Darüber hinaus ist es bei dem Rotorblatt in einer Ausgestaltung vorteilhaft, dass die wenigstens eine Trimmkammer in einem der Rotorblattnase zugewandten Bereich, vorzugsweise in einem Vorderkasten des Rotorblatts, ausgebildet ist.

Insbesondere ist gemäß einer weiteren Ausführungsform des Rotorblatts vorgesehen, dass die wenigstens eine Trimmkammer in einem Vorderkasten des Rotorblatts zwischen der Rotorblattnase und einem der Rotorblattnase zugewandten und zwischen zwei Rotorblattgurten ausgebildeten Steg ausgebildet ist. Hierbei ist auf der Druckseite und auf der Saugseite des Rotorblatts jeweils ein in Längsrichtung des Rotorblatts verlaufender Rotorblattgurt vorgesehen, wobei die beiden Gurte mittels eines Stegs miteinander verbunden sind. Insbesondere weist das Rotorblatt für eine bessere Versteifung zwei nebeneinander angeordnete und in Längsrichtung verlaufende Stege auf, so dass der druckseitige Rotorblattgurt und der saugseitige Rotorblattgurt miteinander verbunden sind.

Insbesondere ist es in einer Weiterbildung des Rotorblatts vorteilhaft, dass die wenigstens eine Trimmkammer unmittelbar angrenzend an einem zwischen den Rotorblattgurten ausgebildeten Steg ausgebildet ist. Hierbei ist die Trimmkammer zwischen der Rotorblattnase und dem die beiden Rotorblattgurte verbindenden Steg ausgebildet, wobei der Steg hierbei als Begrenzung der Trimmkammer genutzt bzw. verwendet wird. Dadurch ergibt sich ein vereinfachter Aufbau der Trimmkammer.

Außerdem ist es bei dem Rotorblatt bevorzugt, dass in dem der äußeren Rotorblattspitze zugewandten Rotorblattendbereich wenigstens eine vorbefüllte Solltrimmkammer mit einer Sollbefüllung vorgesehen ist. Hierdurch wird erreicht, dass das Rotorblatt bereits mit einer Solltrimmkammer, die bereits mit einem Füllgut, wie zum Beispiel Metallkugeln etc., befüllt ist, bereitgestellt wird, wodurch zusätzlich eine befüllbare Trimmkammer vorgesehen ist, um hierdurch eine Feintrimmung des Rotorblatts zu erreichen.

Auch durch die Solltrimmkammer, die vorzugsweise ebenfalls im Vorderkasten, der auch als Nasenkasten bezeichnet wird, eine Verlagerung des Schwerpunktes der Profile im Rotorblattendbereich in Richtung der Rotorblattnase erreicht.

Dazu ist es gemäß einer Weiterbildung des Rotorblatts vorteilhaft, dass die wenigstens eine Solltrimmkammer in einem Längenbereich zwischen 80 % und 100 % der Rotorblattlängsachse im Vorderkasten zwischen der Rotorblattnase und einem Steg vorgesehen ist.

Darüber hinaus ist in einer alternativen Ausführungsform des Rotorblatts vorgesehen, dass wenigstens eine Trimmkammer mit einer Sollbefüllung befüllt ist und wenigstens eine Trimmkammer ein befüllbares Volumen aufweist, das mit einem Füllgut befüllbar ist. Hierdurch ist eine Trimmkammer bereitgestellt, die mit einem Füllgut vorbefüllt ist, wobei ferner zur Feintrimmung ein Volumen der Trimmkammer je nach Anforderung an das Rotorblatt befüllt wird.

Außerdem ist gemäß einer bevorzugten Ausführungsform des Rotorblatts vorgesehen, dass für die wenigstens eine Trimmkammer eine, vorzugsweise verschließbare, Befüllöffnung auf der Druckseite oder auf der Saugseite des Rotorblatts vorgesehen ist. Insbesondere ist hierbei ein Bohrloch oder eine Öffnung auf der Druckseite oder auf der Saugseite des Rotorblatts vorgesehen, um die Trimmkammer mit Füllgut zu befüllen.

Sind vorzugsweise mehrere Trimmkammern im Inneren des Rotorblatts vorgesehen, so ist es im Rahmen der Erfindung vorgesehen, dass für jeweils eine Trimmkammer jeweils eine Befüllöffnung vorgesehen ist.

Gemäß einer vorteilhaften Weiterbildung des Rotorblatts sind zwei oder mehrere befüllte oder befüllbare Trimmkammern im Rotorblattendbereich, vorzugsweise im Vorderkasten des Rotorblatts, vorgesehen.

Hierbei ist es bei einer Weiterbildung des Rotorblatts vorteilhaft, dass eine Trimmkammer auf der der Druckseite des Rotorblatts zugewandten Seite und eine Trimmkammer auf der der Saugseite zugewandten Seite im Vorderkasten des Rotorblatts ausgebildet ist oder sind.

Darüber hinaus wird die Aufgabe gelöst durch eine Windenergieanlage mit wenigstens einem Rotorblatt, vorzugsweise drei Rotorblätter, aufweisenden Rotor, wobei der Rotor mit wenigstens einem voranstehend beschriebenen Rotorblatt ausgebildet ist. Zur Vermeidung von Wiederholungen wird auf die voranstehenden Ausführungen ausdrücklich verwiesen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: schematisch eine Windenergieanlage in einer vereinfachten Ansicht,
- Fig. 2: schematisch eine vereinfachte Draufsicht auf eine Saugseite eines Rotorblatts,
- Fig. 3a): schematisch einen Querschnitt durch das Profil entlang der in Fig. 2 eingezeichneten Ebene III-III gemäß einer ersten Ausführungsform,
- Fig. 3b): schematisch eine vereinfachte Querschnittsansicht eines Rotorblattprofils im Rotorblattendbereich gemäß einer weiteren Ausführungsform und
- Fig. 4: ein schematisches Diagramm betreffend die relative Schwerpunktlage der Rotorblattprofile eines Rotorblatts entlang einer Rotorblattlängsachse mit einem Vergleich der Schwerpunktlage mit Trimmkammern und ohne Trimmkammern im Rotorblattendbereich.

In den Zeichnungen sind jeweils gleiche oder gleichartige Elemente und/oder Teile mit denselben Bezugsziffern versehen, so dass von einer erneuten Vorstellung jeweils abgesehen wird.

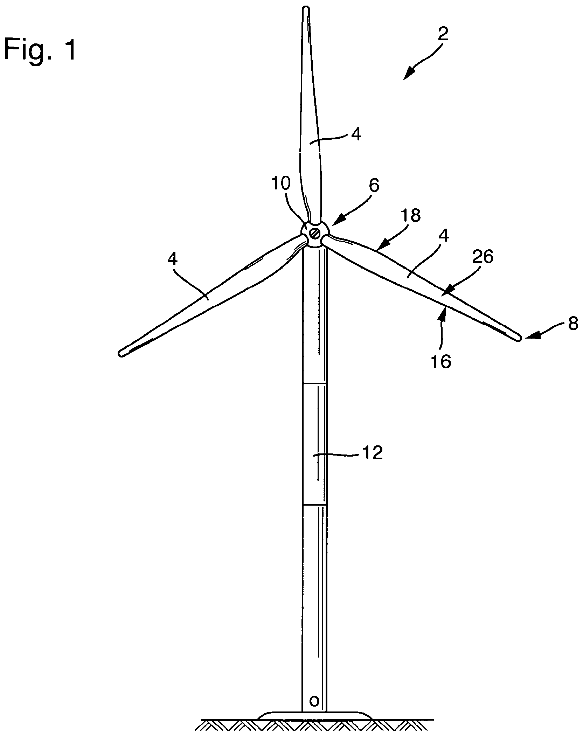

Fig. 1 zeigt in schematisch vereinfachter Ansicht eine Windenergieanlage 2, deren Rotorblätter 4 sich zwischen einer Rotorblattwurzel 6 und einer Rotorblattspitze 8 erstrecken. Die Rotorblätter 4 sind an ihren Rotorblattwurzeln 6 mit einer Nabe 10 verbunden, die die Hauptwelle der Windenergieanlage 2 antreibt. Der Rotor der Windenergieanlage 2 einschließlich des Maschinenhauses, welches die weiteren Komponenten aufnimmt, ist auf einer Tragstruktur 12, beispielsweise einem Turm, befestigt.

Die Rotorblätter 4 umfassen jeweils eine Saugseite 14 (in Fig. 1 nicht sichtbar), eine Druckseite 26 sowie eine Rotorblatthinterkante 18, wobei aus Gründen der Übersichtlichkeit nur eines der Rotorblätter 4 mit den entsprechenden Bezugszeichen dargestellt ist. Die Saugseite 14 und die Druckseite 26 sowie die Rotorblattnase 16 und die Rotorblatthinterkante 18 erstrecken sich zwischen der Rotorblattwurzel 6 und der Rotorblattspitze 8, wodurch ein aerodynamisch wirksames Rotorblattprofil des Rotorblatts 4 festgelegt ist. Das Rotorblattprofil des Rotorblatts 4 ist im Hinblick auf seine Leistungsausbeute aerodynamisch optimiert.

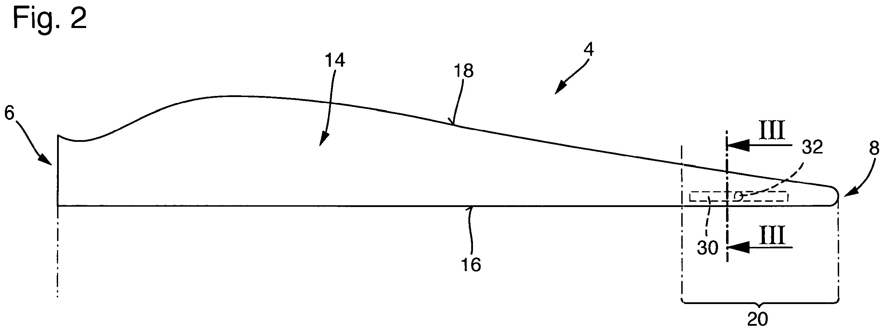

Fig. 2 zeigt schematisch eine Draufsicht auf ein Rotorblatt 4 in einer vereinfachten Ansicht von seiner Saugseite 14.

Das Rotorblatt 4 weist einen der Rotorblattspitze 8 zugewandten Rotorblattendbereich 20 auf, wobei im Rotorblattendbereich 20 im Inneren, vorzugsweise im Vorderkasten des Rotorblatts 4, eine mit einem Füllgut befüllbare Trimmkammer 30 angeordnet ist. Durch das Vorsehen der Trimmkammer 30 im Rotorblattendbereich 20 wird erreicht, dass der Schwerpunkt der Profile im Rotorblattendbereich 20 bezüglich der Schwerpunktlage in Richtung der Rotorblattvorderkante bzw. Rotorblattnase 16 verlagert wird. Dadurch werden Flatterbewegungen des Rotorblatts 4 bei Betrieb der Windenergieanlage 2 vermieden, wodurch ein sicherer Betrieb der Windenergieanlage 2 erreicht wird. Zur Befüllung der Trimmkammer 30 ist an der Oberseite der Saugseite 14 eine Befüllöffnung 32 vorgesehen, so dass Füllgut über die Öffnung 32 in die Trimmkammer 30 eingefüllt wird. Die Befüllöffnung 32 ist hierbei vorzugsweise mit einem Verschluss, wie z.B. einem Deckel oder dergleichen, verschließbar ausgebildet. Alternativ oder zusätzlich kann auch auf der Druckseite 26 eine Befüllöffnung für die Trimmkammer 30 vorgesehen sein.

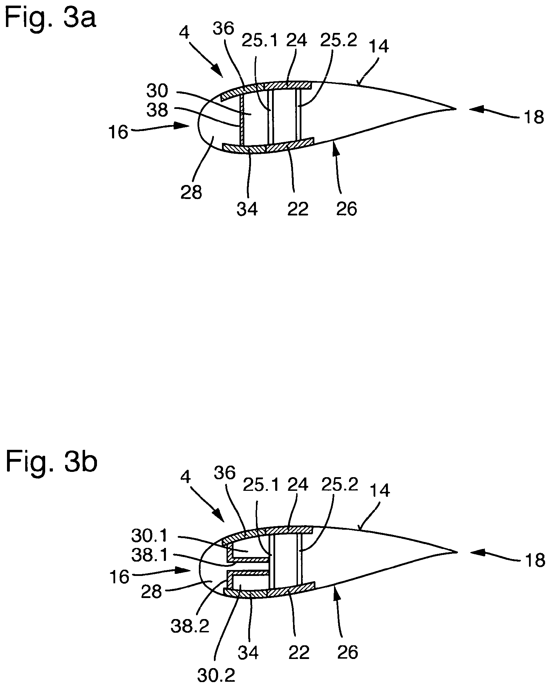

Fig. 3a) zeigt in schematisch vereinfachter Ansicht einen Querschnitt durch das Rotorblatt 4 im Rotorblattendbereich 20 entlang der in Fig. 2 mit III-III bezeichneten Ebene in einer ersten Ausführungsform.

Im Inneren des Rotorblatts 4 verlaufen in Längsrichtung des Rotorblatts auf der Saugseite 14 und auf der Druckseite 26 Rotorblattgurte 22, 24, zwischen denen Stege 25.1, 25.2 angeordnet sind, um diese miteinander zu verbinden. Zwischen dem vorderen Steg 25.1 und der Rotorblattnase 26 ist ein Vorderkasten 28 ausgebildet, in dem die Trimmkammer 30 angeordnet ist.

Gemäß dem in Fig. 3a) dargestellten Ausführungsbeispiel wird auf der Saugseite 14 sowie auf der Druckseite 26 im Anschluss an die Rotorblattgurte 22, 24, insbesondere aus strukturmechanischen Gründen, jeweils eine Lage 34, 36 aus Balsaholz angeordnet, welche als obere und untere Bewandung der Trimmkammer 30 ausgenutzt oder ausgebildet ist. Um die Trimmkammer 30 zur Rotorblattnase 16 zu begrenzen, ist zwischen den Lagen 34 und 36 eine Wand 38 ausgebildet. Unter Verwendung des Steges 25.1 ist hierbei die Trimmkammer 30 zur Rotorblatthinterkante 18 räumlich begrenzt.

Gegenüber dem in Fig. 3a) dargestellten Ausführungsbeispiel ist in Fig. 3b) schematisch ein weiteres Ausführungsbeispiel eines Rotorblatts 4 mit zwei Trimmkammern 30.1. 30.2 im Rotorblattendbereich dargestellt, wobei beide Trimmkammern 30.1, 30.2 im Vorderkasten 28 des Rotorblatts 4 ausgebildet sind. Die Trimmkammer 30.1 ist auf der Seite der Saugseite 14 angeordnet, während die zweite Trimmkammer 30.2 der Druckseite 26 zugewandt ausgebildet ist. Hierbei ist die Trimmkammer 30.1, 30.2 mit jeweils einer entsprechenden Bewandung 38.1, 38.2 ausgebildet, wodurch eine kammerartige Trimmkammer 30.1, 30.2 entsteht.

Sowohl die Trimmkammer 30 (vgl. Fig. 3a)) als auch die Trimmkammern 30.1, 30.2 (vgl. Fig. 3b)) sind im Inneren des Rotorblatts 4 kanalartig im Rotorblattendbereich 20 ausgebildet, wobei vorzugsweise der Rotorblattendbereich 20 zwischen 80 % und 100 % der Rotorblattlängsachse des Rotorblatts 4, gemessen von der Rotorblattwurzel 6, beträgt.

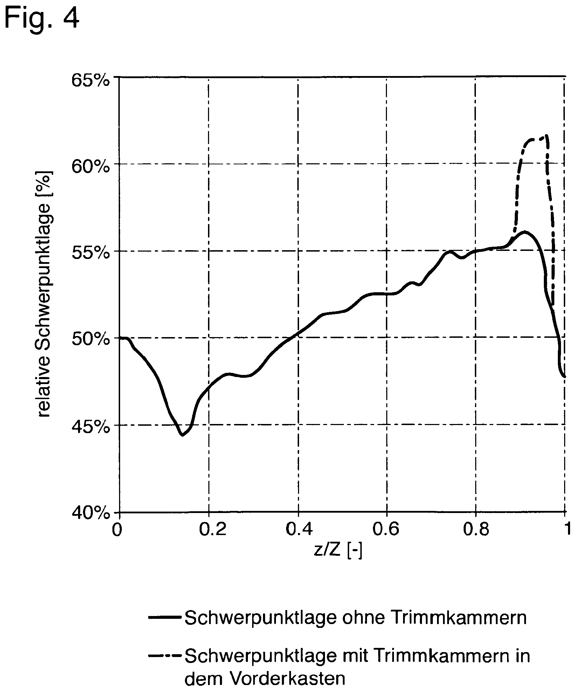

In Fig. 4 ist schematisch für ein Ausführungsbeispiel eines Rotorblatts die relative Schwerpunktlage entlang der (normierten) Rotorblattlängsachse dargestellt. Wie aus Fig. 4 ersichtlich ist, ist im Bereich zwischen 0,8 und 1 (entspricht 80 % bis 100 % der Rotorblattlänge) die Schwerpunktlage der Profile in diesem Rotorblattendbereich mit Trimmkammern im Vorderkasten gegenüber der Schwerpunktlage ohne Trimmkammern deutlich erhöht, d.h., dass der Schwerpunkt der Profile im Rotorblattendbereich mit befüllten Trimmkammern in Richtung der Rotorblattnase 16 verlagert wird, wodurch ansonsten potenziell auftretende Flatterbewegungen des Rotorblatts vermieden werden.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen.

### Bezugszeichenliste

- 2: Windenergieanlage
- 4: Rotorblatt
- 6: Rotorblattwurzel
- 8: Rotorblattspitze
- 10: Nabe
- 12: Tragstruktur
- 14: Saugseite
- 16: Rotorblattnase
- 18: Rotorblatthinterkante
- 20: Rotorblattendbereich
- 22: Rotorblattgurt
- 24: Rotorblattgurt
- 25.1, 25.2: Steg
- 26: Druckseite
- 28: Vorderkasten
- 30: Trimmkammer
- 30.1, 30.2: Trimmkammer
- 32: Befüllöffnung
- 34: Balsaholzlage
- 36: Balsaholzlage
- 38: Trennwand
- 38.1, 38.2: Bewandung

## Patentansprüche

1. Rotorblatt (4) einer Windenergieanlage (2), wobei das Rotorblatt (4) eine Saugseite (14), eine Druckseite (26), eine Rotorblattnase (16) und eine Rotorblatthinterkante (18) aufweist, die sich zwischen einer Rotorblattwurzel (6) und einer Rotorblattspitze (8) erstrecken und ein Rotorblattprofil festlegen, wobei in einem der Rotorblattspitze (8) zugewandten Rotorblattendbereich (20) wenigstens eine mit einem Füllgut vorbefüllte Solltrimmkammer mit einer Sollbefüllung vorgesehen ist, **dadurch gekennzeichnet, dass** in einem der Rotorspitze (8) zugewandten Rotorblattendbereich (20) eine mit Füllgut befüllbare Trimmkammer (30, 30.1, 30.2) zur Feintrimmung des Rotorblatts (4) vorgesehen ist.

2. Rotorblatt (4) nach Anspruch 1, **dadurch gekennzeichnet, dass** in einem Längenbereich zwischen 80 % und 1 00 % der Länge des Rotorblatts (4), insbesondere der Rotorblattlängsachse des Rotorblatts (4), gemessen von der Rotorblattwurzel (6) zur Rotorblattspitze (8), die wenigstens eine Trimmkammer (30, 30.1, 30.2) im Rotorblatt (4) vorgesehen ist.

3. Rotorblatt (4) nach Anspruch 1 oder 2, **dadurch gekennzeichnet, dass** die wenigstens eine Trimmkammer (30, 30.1, 30.2) in einem der Rotorblattnase (16) zugewandten Bereich, vorzugsweise in einem Vorderkasten (28) des Rotorblatts (4), ausgebildet ist.

4. Rotorblatt (4) nach einem der Ansprüche 1 bis 3, **dadurch gekennzeichnet, dass** die wenigstens eine Trimmkammer (30, 30.1, 30.2) in einem Vorderkasten (28) des Rotorblatts (4) zwischen der Rotorblattnase (16) und einem der Rotorblattnase (16) zugewandten und zwischen zwei Rotorblattgurten ausgebildeten Steg ausgebildet ist.

5. Rotorblatt (4) nach einem der Ansprüche 1 bis 4, **dadurch gekennzeichnet, dass** die wenigstens eine Trimmkammer (30, 30.1, 30.2) unmittelbar angrenzend an einem zwischen zwei Rotorblattgurten vorgesehenen Steg ausgebildet ist.

6. Rotorblatt (4) nach einem der vorangehenden Ansprüche, **dadurch gekennzeichnet, dass** die wenigstens eine Solltrimmkammer in einem Längenbereich zwischen 80 % und 100 % der Rotorblattlängsachse im Vorderkasten (28) zwischen der Rotorblattnase (16) und einem zwischen zwei Rotorblattgurten ausgebildeten Steg vorgesehen ist.

7. Rotorblatt (4) nach einem der Ansprüche 1 bis 6, **dadurch gekennzeichnet, dass** für die wenigstens eine Trimmkammer (30, 30.1, 30.2) eine, vorzugsweise verschließbare, Befüllöffnung auf der Druckseite (26) oder auf der Saugseite (14) des Rotorblatts (4) vorgesehen ist.

8. Rotorblatt (4) nach einem der Ansprüche 1 bis 7, **dadurch gekennzeichnet, dass** zwei oder mehrere befüllte oder befüllbare Trimmkammern (30, 30.1, 30.2) im Rotorblattendbereich (20), vorzugsweise im Vorderkasten (28) des Rotorblatts (4), vorgesehen sind.

9. Rotorblatt (4) nach Anspruch 8, **dadurch gekennzeichnet, dass** eine Trimmkammer (30, 30.1, 30.2) auf der der Druckseite (26) des Rotorblatts (4) zugewandten Seite und eine Trimmkammer (30, 30.1, 30.2) auf der der Saugseite (14) zugewandten Seite im Vorderkasten (28) des Rotorblatts (4) ausgebildet sind .

10. Windenergieanlage (2) mit einem wenigstens ein Rotorblatt (4), vorzugsweise drei Rotorblätter (4), aufweisenden Rotor (10), wobei der Rotor mit wenigstens einem Rotorblatt (4) nach einem der Ansprüche 1 bis 9 ausgebildet ist.

## Claims

1. A rotor blade (4) of a wind energy installation (2), wherein the rotor blade (4) has a suction side (14), a pressure side (26), a rotor blade nose (16) and a rotor blade trailing edge (18), which extend between a rotor blade root (6) and a rotor blade tip (8) and which define a rotor blade profile, wherein at least one target balance chamber which is prefilled with a filling material and which has a desired filling level is provided in a rotor blade end region (20) which faces towards the rotor blade tip (8), **characterised in that**, in a rotor blade end region (20) which faces towards the rotor tip (8), a balance chamber (30, 30.1, 30.2) which can be filled with a filling material is provided for the fine tuning of the balancing of the rotor blade (4).

2. The rotor blade (4) according to claim 1, **characterised in that** the at least one balance chamber (30, 30.1, 30.2) is provided in the rotor blade (4) in a region in the lengthwise direction at between 80% and 100% of the length of the rotor blade (4), in particular of the rotor blade longitudinal axis of the rotor blade (4), measured from the rotor blade root (6) to the rotor blade tip (8).

3. The rotor blade (4) according to claim 1 or 2, **characterised in that** the at least one balance chamber (30, 30.1, 30.2) is formed in a region which faces towards the rotor blade nose (16), preferably in a front box (28) of the rotor blade (4).

4. The rotor blade (4) according to any one of the claims 1 to 3, **characterised in that** the at least one balance chamber (30, 30.1, 30.2) is formed in a front box (28) of the rotor blade (4) between the rotor blade nose (16) and a web which faces towards the rotor blade nose (16) and which is formed between two rotor blade spar caps.

5. The rotor blade (4) according to any one of the claims 1 to 4, **characterised in that** the at least one balance chamber (30, 30.1, 30.2) is formed directly adjacent to a web which is provided between two rotor blade spar caps.

6. The rotor blade (4) according to any one of the preceding claims, **characterised in that** the at least one target balance chamber is provided in a region in the lengthwise direction at between 80% and 100% of the rotor blade longitudinal axis in the front box (28) between the rotor blade nose (16) and a web which is formed between two rotor blade spar caps.

7. The rotor blade (4) according to any one of the claims 1 to 6, **characterised in that**, for the at least one balance chamber (30, 30.1, 30.2), a filling opening, preferably a closable filling opening, is provided on the pressure side (26) or on the suction side (14) of the rotor blade (4).

8. The rotor blade (4) according to any one of the claims 1 to 7, **characterised in that** two or more filled or fillable balance chambers (30, 30.1, 30.2) are provided in the rotor blade end region (20), preferably in the front box (28) of the rotor blade (4).

9. The rotor blade (4) according to claim 8, **characterised in that** a balance chamber (30, 30.1, 30.2) is formed on the side which faces towards the pressure side (26) of the rotor blade (4) and a balance chamber (30, 30.1, 30.2) is formed in the front box (28) on the side which faces towards the suction side (14) of the rotor blade (4).

10. A wind energy installation (2) with a rotor (10) which comprises at least one rotor blade (4), preferably three rotor blades (4), wherein the rotor is formed with at least one rotor blade (4) according to any one of the claims 1 to 9.

## Revendications

1. Pale de rotor (4) d'une éolienne (2), dans laquelle la pale de rotor (4) présente un côté aspiration (14), un côté pression (26), un nez de pale de rotor (16) et une arête arrière de pale de rotor (18), qui s'étendent entre une racine de pale de rotor (6) et une pointe de pale de rotor (8) et définissent un profil de pale de rotor, dans laquelle au moins une chambre de compensation de consigne pré-remplie d'un produit de remplissage avec un remplissage de consigne est prévue dans une zone d'extrémité de pale de rotor (20) tournée vers la pointe de pale de rotor (8), **caractérisée en ce qu'**une chambre de compensation (30, 30.1, 30.2) pouvant être remplie de produit de remplissage pour la compensation précise de la pale de rotor (4) est prévue dans une zone d'extrémité de pale de rotor (20) tournée vers la pointe de rotor (8).

2. Pale de rotor (4) selon la revendication 1, **caractérisée en ce que** dans une plage de longueur entre 80 % et 100 % de la longueur de la pale de rotor (4), en particulier de l'axe longitudinal de pale de rotor de la pale de rotor (4), mesurée de la racine de pale de rotor (6) à la pointe de pale de rotor (8), l'au moins une chambre de compensation (30, 30.1, 30.2) est prévue dans la pale de rotor (4).

3. Pale de rotor (4) selon la revendication 1 ou 2, **caractérisée en ce que** l'au moins une chambre de compensation (30, 30.1, 30.2) est réalisée dans une zone tournée vers le nez de pale de rotor (16), de préférence dans une caisse avant (28) de la pale de rotor (4).

4. Pale de rotor (4) selon l'une quelconque des revendications 1 à 3, **caractérisée en ce que** l'au moins une chambre de compensation (30, 30.1, 30.2) est réalisée dans une caisse avant (28) de la pale de rotor (4) entre le nez de pale de rotor (16) et une entretoise tournée vers le nez de pale de rotor (16) et réalisée entre deux ceintures de pale de rotor.

5. Pale de rotor (4) selon l'une quelconque des revendications 1 à 4, **caractérisée en ce que** l'au moins une chambre de compensation (30, 30.1, 30.2) est réalisée de manière directement adjacente à une entretoise prévue entre deux ceintures de pale de rotor.

6. Pale de rotor (4) selon l'une quelconque des revendications précédentes, **caractérisée en ce que** l'au moins une chambre de compensation de consigne est prévue dans une plage de longueur entre 80 % et 100 % de l'axe longitudinal de pale de rotor dans la caisse avant (28) entre le nez de pale de rotor (16) et une entretoise réalisée entre deux ceintures de pale de rotor.

7. Pale de rotor (4) selon l'une quelconque des revendications 1 à 6, **caractérisée en ce que** pour l'au moins une chambre de compensation (30, 30.1, 30.2) une ouverture de remplissage, pouvant être fermée de préférence, est prévue sur le côté pression (26) ou sur le côté aspiration (14) de la pale de rotor (4).

8. Pale de rotor (4) selon l'une quelconque des revendications 1 à 7, **caractérisée en ce que** deux ou plusieurs chambres de compensation (30, 30.1, 30.2) remplies ou remplissables sont prévues dans la zone d'extrémité de pale de rotor (20), de préférence dans la caisse avant (28) de la pale de rotor (4).

9. Pale de rotor (4) selon la revendication 8, **caractérisée en ce qu'**une chambre de compensation (30, 30.1, 30.2) est réalisée sur le côté tourné vers le côté pression (26) de la pale de rotor (4) et une chambre de compensation (30, 30.1, 30.2) est réalisée sur le côté tourné vers le côté aspiration (14) dans la caisse avant (28) de la pale de rotor (4).

10. Éolienne (2) avec un rotor (10) présentant au moins une pale de rotor (4), de préférence trois pales de rotor (4), dans lequel le rotor est réalisé avec au moins une pale de rotor (4) selon l'une quelconque des revendications 1 à 9.
